# FASCICULE DE BREVET EUROPEEN

(11) **EP 3 029 355 B1**
(45) Date de publication et mention de la délivrance du brevet: **24.05.2017**
(21) Numéro de dépôt: 15194208.3
(22) Date de dépôt: 12.11.2015
(51) Int. Cl.: F16H 7/08

(54) **GALET TENDEUR**
SPANNROLLE
TENSIONING ROLLER

(30) Priorité: 04.12.2014 FR 1461909
(43) Date de publication de la demande: 08.06.2016
(73) Titulaire: Renault S.A.S., 92100 Boulogne-Billancourt (FR)
(72) Inventeur: CARVALHEIRO, Antonio, 92700 Colombes (FR)

(56) Documents cités:
- DE-U1- 20 319 886
- GB-A- 2 263 150

## Description

### Domaine technique de l'invention

La présente invention concerne un galet tendeur d'un moteur à combustion interne de véhicule automobile, comme révélé dans GB2263150A et correspondant au préambule de la revendication 1.

### Etat de la technique

Les moteurs à combustion interne ou thermiques sont associés avec des systèmes accessoires nécessaires au fonctionnement dudit moteur. Par exemple, une pompe permet une circulation de fluide destiné au refroidissement du moteur lors de son fonctionnement. De même, un alternateur permet de charger une batterie électrique pour fournir l'énergie électrique indispensable aux différents systèmes à moteurs électriques associés au bon fonctionnement du moteur thermique, tels que par exemple, une unité de commande. Lesdits moyens sont activés de façon synchrone au fonctionnement du moteur par une ou plusieurs courroies d'accessoires disposées généralement parallèles à une face accessoires du moteur. La courroie d'accessoires entoure une roue dentée fixée solidaire à une extrémité de vilebrequin et un ou plusieurs pignons fixés solidaires d'arbres d'accessoires. Elle assure l'entrainement par frottement avec la roue dentée et les pignons menés. Ladite courroie est de manière connue issue de matière polymère et tissu et elle doit donc être changée en fonction de l'usure. Pour ce faire, un jeu est produit entre la courroie et la roue dentée et les pignons menés, ladite courroie est alors détendue et peut être extraite de son logement.

De manière connue, une mise en tension de la courroie d'accessoires est effectuée à l'aide de galets tendeurs qui sont disposés avantageusement sur le parcours de la courroie pour assurer une tension optimale de la courroie. Le galet tendeur permet ainsi de tendre la courroie et de favoriser l'enroulement de cette dernière au tour des poulies d'accessoires (alternateur, compresseur, etc..). Le galet tendeur est essentiellement un moyen pour accroitre le parcours de la courroie. On entend par parcours de la courroie le chemin suivi par un point de référence de la courroie autour des éléments de contact comprenant la roue dentée, les pignons menés et les galets. Le galet tendeur peut aussi permettre de détendre la courroie en raccourcissement de manière temporaire ledit parcours de courroie afin de pouvoir retirer ladite courroie.

On connait plusieurs dispositifs de tensions de courroie tels que celui divulgué dans la publication FR-A1-2667916 comprenant des moyens de fixation de galets tendeurs comportant par exemple des vis de fixation traversant des trous oblongs qui autorisent des libertés pour tendre ou détendre la courroie.

Toutefois, lesdits moyens de fixation peuvent être cachés par la courroie et sont de ce fait peu ou non accessibles.

Un autre inconvénient est que les vis de fixation peuvent comporter des têtes spécifiques nécessitant un changement d'outil lors de l'opération d'extraction de la courroie.

On connait également des galets tendeurs comportant des moyens élastiques de mise en tension de la courroie et un roulement autour duquel la courroie est disposée. L'axe du roulement peut comporter un point d'accrochage pour un outil afin de détendre la courroie lors du changement de ladite courroie. Toutefois, cette opération qui implique une rotation dans le sens anti-horaire, peut aussi avoir pour conséquence de libérer une bague intérieure du roulement, ce qui ajoute une faille importante de sécurité du fonctionnement de la courroie.

### Bref résumé de l'invention

Le but de l'invention est de pallier les inconvénients cités et un des objets de l'invention est un galet tendeur de courroie de moteur de véhicule automobile comprenant les caractéristiques de la revendication 1. De manière avantageuse, Le dispositif d'accouplement permet d'empêcher un mouvement relatif de rotation entre la soucoupe d'étanchéité et la plaque de support. Ladite soucoupe permet donc de transmettre des efforts de rotation à la plaque de support.

Selon d'autres caractéristiques de l'invention :
- le galet tendeur comporte des moyens de liaison aptes à rendre solidaires en rotation la soucoupe d'étanchéité et le bras tubulaire.

De manière avantageuse, la soucoupe d'étanchéité est solidaire en rotation avec le bras tubulaire qui est lui-même fixé à la plaque de support. La soucoupe d'étanchéité est alors solidaire en rotation de la plaque de support et on peut alors agir uniquement sur la soucoupe pour obtenir une rotation de la plaque support autour du pied de galet.
- la soucoupe porte un doigt axial engagé dans une encoche complémentaire creusée dans un bord en périphérie du bras tubulaire.

De manière préférentielle, la soucoupe porte un doigt axial engagé dans une encoche complémentaire creusée dans le bord en périphérie du bras de rotation tubulaire afin de rendre solidaire en rotation le bras de rotation tubulaire et la soucoupe, le bras étant solidaire en rotation de la plaque de support.
- la soucoupe porte une encoche axiale pour recevoir un doigt complémentaire s'étendant axialement depuis le bord périphérique du bras tubulaire.

De manière préférentielle, le bras tubulaire porte un doigt s'étendant depuis le bord périphérique du bras parallèlement à l'axe dudit bras, ledit doigt est engagé dans une encoche complémentaire creusée dans la soucoupe d'étanchéité et rend solidaire en rotation ledit bras et ladite soucoupe, le bras étant fixé à la plaque de support. Ceci permet de faire tourner la plaque de support en agissant sur la soucoupe.
- la soucoupe porte une denture engagée dans une denture complémentaire portée par le bras tubulaire.

De manière préférentielle, la soucoupe et le bras tubulaire portent des dentures complémentaires qui sont engagées l'une dans l'autre pour rendre solidaires en rotation le bras tubulaire et la soucoupe. Ladite soucoupe est alors solidaire en rotation avec la plaque de support.
- la soucoupe comporte un orifice axial en regard avec la chambre intérieure cylindrique du bras tubulaire, ledit orifice est traversé par un moyen de fixation enfoncé dans la chambre intérieur du bras.

De manière préférentielle, la soucoupe comporte un orifice axial en regard avec l'intérieur du bras tubulaire, ledit orifice étant traversé par un moyen de fixation qui est enfoncé dans la chambre intérieure du bras. Ledit moyen de fixation pousse ainsi la soucoupe contre le bord périphérique du bras et en appui contre une bague intérieure du roulement. Ainsi la soucoupe est maintenue axialement contre le bord périphérique du bras et en rotation par les moyens de liaison.
- la soucoupe porte un moyen d'accrochage s'étendant parallèlement à l'axe du bras du côté opposé au carter du moteur.

De manière préférentielle, la soucoupe porte un moyen d'accrochage s'étendant orthogonalement au plan de la soucoupe et sensiblement parallèlement à l'axe du bras et du côté opposé au carter du moteur. On peut alors agripper ledit moyen d'accrochage pour agir sur la plaque de support en rotation afin de détendre temporairement la courroie.
- le moyen d'accrochage porte un moyen d'interface avec un outil de vissage.

De manière préférentielle, ledit moyen d'accrochage porte un moyen d'interface avec un outil de vissage. Ledit moyen d'interface permet de ne pas changer d'outil de vissage lors de l'opération de changement de la courroie.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
- la figure 1 représente une vue schématique d'un galet tendeur fixé à une face accessoires d'un carter du moteur.
- la figure 2 représente une vue schématique d'un galet tendeur selon l'état de la technique.
- la figure 3 représente une vue schématique d'un galet tendeur selon l'invention.
- les figures 4, 5 et 8 représentent une vue schématique du bras de rotation et d'une soucoupe selon un mode de réalisation.
- les figures 6 et 7 représentent une vue schématique de la soucoupe selon un autre mode de réalisation.

### Description détaillée des figures

Dans la description qui va suivre, des chiffres de référence identiques désignent des pièces identiques ou ayant des fonctions similaires.

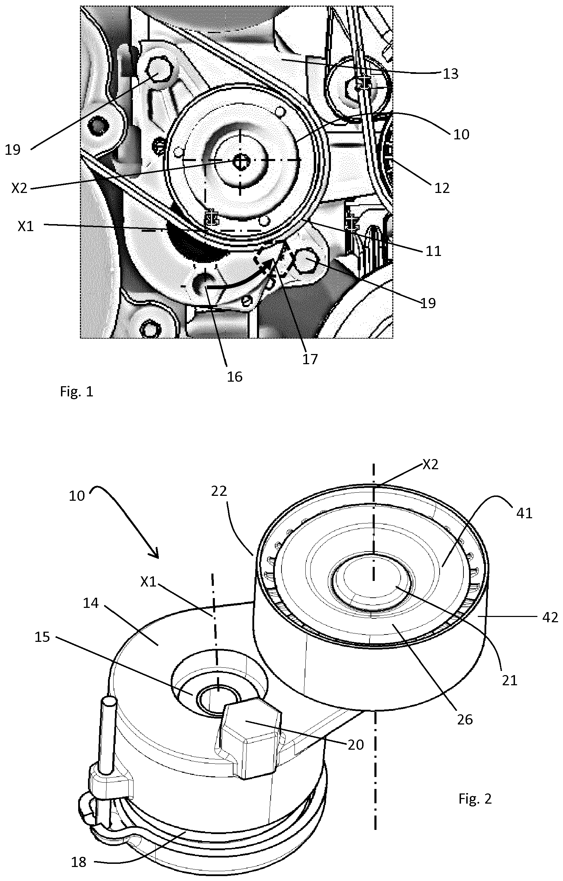

Tel que représenté dans la figure 1, une courroie 11 entoure partiellement un galet tendeur 10 destiné à modifier sensiblement le parcours de ladite courroie afin d'assurer une tension de courroie et un contact optimal de ladite courroie avec une roue dentée (non représentée) fixée solidaire à une extrémité du vilebrequin et avec le pignon mené 12 fixé à une extrémité d'un arbre de rotation d'accessoires. Lesdits accessoires sont dans une liste comprenant une pompe à eau, un alternateur, une pompe de direction assistée. Lesdites extrémités débouchent d'une face du carter du moteur connue comme la face accessoires 13 dudit carter.

La figure 2 représente un galet tendeur connu dans l'état de la technique. Le galet tendeur 10 comprend une plaque de support 14 tenue par un pied de galet 15 qui est fixé à la paroi de la face accessoires 13 du moteur par une ou plusieurs vis de fixation 19. Ladite plaque de support est mobile en pivotement autour de l'axe X1 dudit pied de galet 15 dans le sens anti-horaire entre une position extrême de butée 16 et une position transitoire de maintenance 17. Des moyens élastiques 18 sont aptes à ramener ladite plaque de support 14 vers la position de butée 16. On peut ainsi faire tourner la plaque de support depuis la position de butée 16 vers la position de maintenance 17 afin de diminuer la tension sur la courroie, ladite position de maintenance correspond par exemple à la création d'un jeu radial entre la courroie 11 et le galet tendeur 10. Ledit jeu autorise ensuite l'enlèvement de la courroie en vue de son remplacement.

Pour pouvoir agir sur ladite plaque de support et lui imposer une rotation dans le sens anti-horaire tel que représenté dans la figure 1, la plaque de support 14 est prolongée en bordure périphérique radiale par un doigt de maintenance 20 qui s'étend selon un axe sensiblement parallèle à celui du pied de galet 15, ledit doigt de maintenance présente une forme saisissable par un outil de vissage. Selon les figures 1 et 2, la forme saisissable présente une tête hexagonale. Ainsi l'outil de vissage peut prendre le doigt de maintenance pour faire tourner en rotation la plaque de support 14 autour de l'axe X1 dudit pied de galet 15.

La plaque de support 14 est prolongée par un bras tubulaire 21 de rotation disposé de façon sensiblement diamétralement opposé au doigt de maintenance 20 par rapport à l'axe du pied 15. Ledit bras tubulaire de rotation 21 s'étend selon un axe X2 sensiblement parallèle à l'axe X1 du pied de galet et il est destiné à accueillir un moyen de réduction de frottement 40 qui est ici un roulement. Le roulement comprend une bague intérieure 41 qui est montée autour du bras tubulaire de rotation 21 en appui sur la plaque de support 14, et une bague extérieure 42 entourée par la courroie 11. La position de butée 16 de la plaque de support 14 correspond à un appui de la bague extérieure 42 du moyen de réduction de frottement 40 contre la courroie 11 afin de permettre une mise en tension de ladite courroie 11.

Le galet tendeur 10 comprend en partie supérieure 22 opposée à la face accessoires 13 du carter une soucoupe d'étanchéité 26 destinée à isoler les composants du moyen de réduction de frottement contre des impuretés ou poussières qui sont susceptibles de détériorer le fonctionnement dudit moyen de réduction des frottements 40. La soucoupe d'étanchéité 26 présente une forme sensiblement circulaire et recouvre une face radiale supérieure du roulement 40 et elle comprend un orifice de fixation 24 dans le prolongement de la chambre intérieure 25 du bras tubulaire 21, ledit orifice de fixation est traversé par une vis de fixation enfoncée dans ladite chambre intérieure 25 du bras tubulaire 21. Dans sa position de fonctionnement, la soucoupe d'étanchéité 26 est montée en appui contre la bague intérieure du roulement.

Lorsque la courroie 11 montée doit être changée, l'accès au doigt de maintenance 20 peut être caché ou sensiblement entravé par la courroie. Le changement de la courroie doit alors passer par une coupure de la courroie et peut entrainer une brusque rotation de la plaque de support et entrainer des chocs et contacts de la plaque de support 14 ou du roulement avec des pièces environnantes.

La disposition du doigt de maintenance 20 entraine donc un encombrement plus important pour prendre en compte les différents gabarits ou jeux des pièces lors de l'opération de changement de la courroie 11.

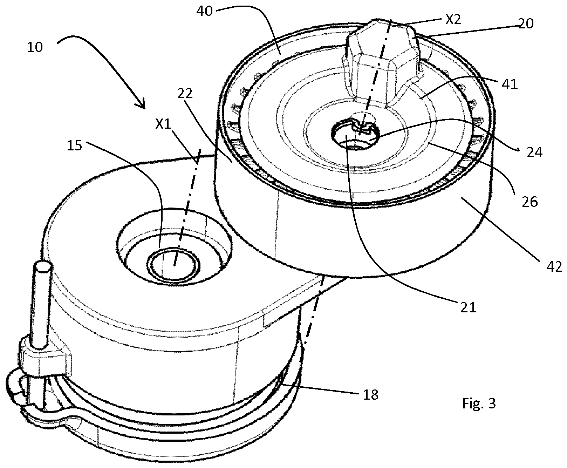

Selon la figure 3, le galet tendeur 10 selon l'invention comprend une soucoupe d'étanchéité 26 et des moyens de fixation aptes à rendre solidaires en rotation la soupe d'étanchéité 26 et la plaque de support 14. Ainsi il n'est plus nécessaire de positionner le doigt de maintenance 20 fixé à la plaque de support 14 mais de façon simple fixé à la soucoupe d'étanchéité 26. Il n'est plus besoin non plus d'accroitre l'encombrement autour du galet pour prendre en compte l'opération de changement de la courroie.

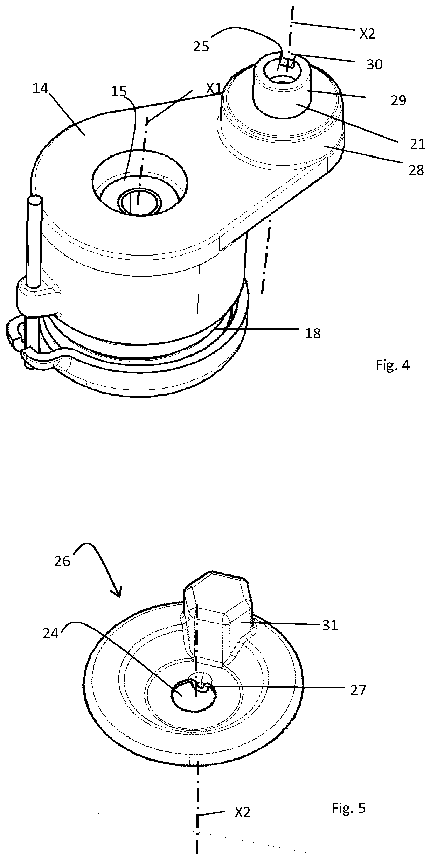

Les figures 4, 5 et 8 représentent un mode préféré de réalisation.

Selon la figure 5, la soucoupe d'étanchéité 26 comporte un orifice de fixation 24 destiné à être traversé par une vis de fixation et un doigt de liaison 27 axial qui s'étend depuis la bordure dudit orifice de fixation 24, selon l'axe X2 dudit orifice et vers la face accessoires 13 du carter du moteur. Ledit doigt de liaison 27 est obtenu par emboutissage et ne vient pas empiéter la section de l'orifice de fixation 24.

Selon la figure 4, le bras tubulaire de rotation 21 s'étend depuis la plaque de support 14 par une extrémité inférieure 28. Il peut par exemple être fixé à ladite plaque par soudure ou être partie de ladite plaque de support par moulage. Ledit bras tubulaire de rotation 21 comprend à une extrémité supérieure 29 opposée une encoche 30 sensiblement complémentaire au doigt de liaison 27 de la soucoupe d'étanchéité. Lors du montage, ledit doigt de liaison 27 est reçu dans ladite encoche 30 du bras de rotation avec un jeu faible inférieur à 1/10mm. La vis de fixation est ensuite enfoncée au travers de l'orifice de fixation 24 dans le bras tubulaire de rotation 21 et pousse et maintient le doigt de liaison 27 de la soucoupe d'étanchéité 26 dans l'encoche 30 du bras de rotation 21. La soucoupe d'étanchéité est alors solidaire en rotation avec le bras tubulaire de rotation et donc avec la plaque de support 14. On peut alors manipuler la soucoupe d'étanchéité 26 en pivotement autour de l'axe du pied de galet 15, ce qui entraine en pivotement la plaque de support 14 autour du même pied.

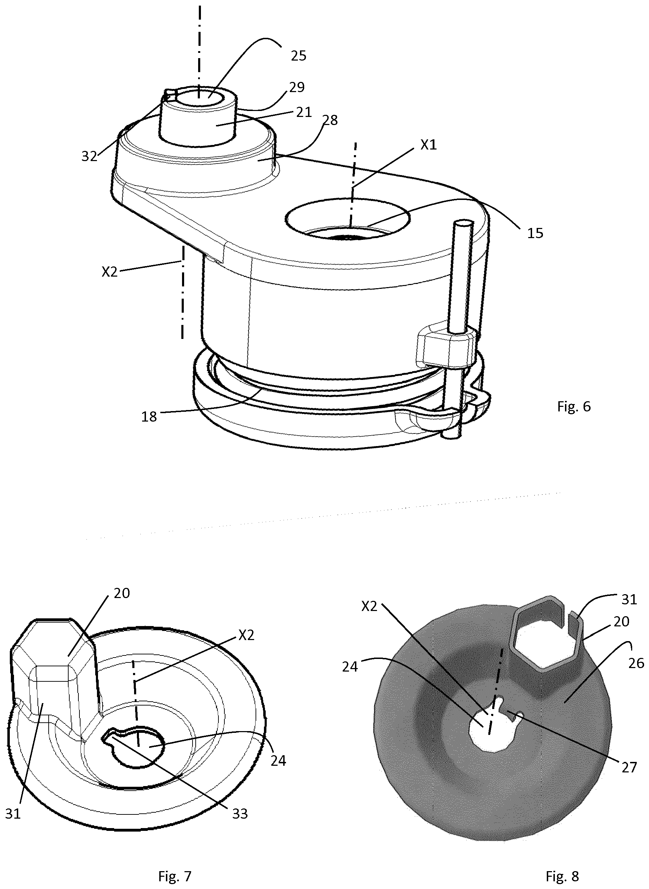

Pour ce faire, selon les figures 5 ou 7, la soucoupe d'étanchéité 26 comporte sur une face supérieure tournée à l'opposé de la face accessoires 13 du carter un moyen d'accrochage 31. Ledit moyen d'accrochage s'étend de façon sensiblement orthogonale à ladite soucoupe et sert de doigt de maintenance 20. Il présente une forme de manière préférentielle saisissable par un outil de vissage.

Ladite forme saisissable du doigt de maintenance peut être une bosse comportant un moyen d'interface pour l'outil de vissage telle qu'une forme de tête hexagonale représentée dans les figures 5 ou 7, ou elle peut comprendre des parois qui entourent une tête hexagonale comme représenté dans la figure 8, ou elle peut comprendre une vis à tête hexagonale fixée contre la face supérieure de la soucoupe (non représentée). Ainsi l'outil de vissage peut accrocher ledit doigt de maintenance 20 pour mouvoir en pivotement autour de l'axe X1 du pied de galet 15 la soucoupe d'étanchéité 26 entrainant ainsi la rotation autour du même axe de la plaque de support 14.

De manière préférentielle, le même outil de vissage peut servir au vissage/dévissages des vis de fixation 19 du pied de galet.

Selon un autre mode de réalisation représenté dans les figures 6 et 7, le bras tubulaire 21 est prolongé par son extrémité supérieure 29 selon l'axe du bras par une dent de liaison 32 en bordure périphérique. Ladite dent de liaison 32 est reçue dans une entaille 33 sensiblement complémentaire creusée depuis la bordure de l'orifice de fixation 24 de la soucoupe d'étanchéité 26. De manière préférentielle, ladite dent de liaison 32 ne présente pas une longueur suffisante pour dépasser de la face supérieure de la soucoupe d'étanchéité 26 une fois celle-ci montée pour ne pas gêner la fixation de ladite soucoupe. La vis de fixation permet le maintien axial de ladite soucoupe 26 contre ledit bras 21.

Selon un autre mode de réalisation non représenté, la soucoupe d'étanchéité 26 comprend une couronne portant une denture tournée vers la face accessoires 13 du carter. Le bras tubulaire de rotation 21 porte à son extrémité supérieure 29 également une denture sensiblement complémentaire à la denture de la soucoupe d'étanchéité. Par exemple, les dentures peuvent comprendre des clabots présentant des dents selon l'axe X2, ou une cannelure du bras tubulaire de rotation 21 engagée dans une cannelure complémentaire dans ladite couronne de la soucoupe d'étanchéité. Lors du montage, la denture de la soucoupe est engagée dans la denture complémentaire du bras tubulaire de rotation pour rendre solidaires en rotation la soucoupe d'étanchéité 26 et le bras de rotation 21. La vis de fixation permet le maintien axial de ladite soucoupe 26 contre ledit bras 21.

Ainsi, le galet tendeur 10 comporte un dispositif d'accouplement de la soucoupe d'étanchéité 26 avec le bras de rotation 21 et donc également avec la plaque de support 14 à laquelle ledit bras est fixé par son extrémité inférieure. La soucoupe comporte également un moyen d'accrochage 31 saisissable par un outil de vissage pour servir de doigt de maintenance 20.

L'objet de l'invention est atteint : la plaque de support 14 et la soucoupe d'étanchéité 26 sont liées solidaires en rotation l'une à l'autre et le doigt de maintenance 20 initialement agencé sur la plaque de support 14 est déplacé sur la face supérieure de la soucoupe 26, opposée à la face accessoires 13 du carter, ce qui permet d'une part de réduire l'encombrement du galet tendeur 10 et de faciliter l'opération de changement de courroie 11 nécessitant de détendre la courroie.

Comme il va de soi, l'invention ne se limite pas aux seules formes d'exécution de cette prise, décrites ci-dessus à titre d'exemples, elle en embrasse au contraire toutes les variantes. C'est ainsi notamment que le bras de rotation et la soucoupe d'étanchéité peuvent être rendus solidaires en rotation l'un à l'autre par différents systèmes d'accouplements entre le bras tubulaire et la soucoupe d'étanchéité comme par exemple des goupilles reçues dans des entailles creusées selon l'axe du bras et en bordure de l'orifice de fixation de la soucoupe d'étanchéité.

## Revendications

1. Galet tendeur (10) de courroie (11) de moteur de véhicule automobile comprenant :
- une plaque de support (14) mobile en pivotement autour d'un pied de galet (15) fixé solidaire à un carter du moteur, depuis une position angulaire butée, ledit galet comportant des moyens élastiques (18) pour ramener automatiquement ladite plaque de support à la position de butée,
- un bras tubulaire (21) de rotation s'étendant depuis ladite plaque sensiblement parallèlement au pied de galet (15),
- une soucoupe d'étanchéité (26) fixée au bras tubulaire (21),
ledit galet comprend un dispositif d'accouplement de la soucoupe d'étanchéité (26) avec la plaque de support (14) et **caractérisé en ce que** la soucoupe d'étanchéité (26) porte un doigt de maintenance (20) s'étendant de façon orthogonale à ladite soucoupe, du côté opposé au carter du moteur.

2. Galet tendeur selon la revendication 1, **caractérisé en ce qu'**il comporte des moyens de liaison aptes à rendre solidaires en rotation la soucoupe d'étanchéité (26) et le bras tubulaire (21).

3. Galet tendeur (10) selon la revendication 2, **caractérisé en ce que** la soucoupe d'étanchéité (26) porte un doigt de liaison axial (27) reçu dans une encoche complémentaire (30) creusée axialement et en périphérie du bras tubulaire (21).

4. Galet tendeur (10) selon la revendication 2, **caractérisé en ce que** la soucoupe d'étanchéité (26) porte une entaille (33) accueillant une dent de liaison (32) s'étendant axialement depuis le bord périphérique du bras tubulaire (21).

5. Galet tendeur selon la revendication 2, **caractérisé en ce que** la soucoupe d'étanchéité (26) porte une denture engagée dans une denture complémentaire portée par le bras tubulaire (21).

6. Galet tendeur selon l'une quelconque des revendications 1 à 5, **caractérisé en ce que** la soucoupe d'étanchéité comporte un orifice de fixation (24) traversé par un moyen de fixation qui est enfoncé dans la chambre intérieure (25) du bras tubulaire (21).

7. Galet tendeur (10) selon la revendication 1 à 6, **caractérisé en ce que** le doigt de maintenance (20) porte un moyen d'interface avec un outil de vissage.

8. Moteur de véhicule automobile comportant un galet tendeur selon les revendications 1 à 7.

## Patentansprüche

1. Spannrolle (10) für einen Keilriemen (11) eines Kraftfahrzeugmotors, umfassend:
- eine Stützplatte (14), die von einer Anschlagwinkelposition aus schwenkbeweglich um einen Rollenfuß (15) ist, der fest mit einem Gehäuse des Motors verbunden ist, wobei die Rolle elastische Mittel (18) aufweist, um die Stützplatte automatisch in die Anschlagposition zurückzubewegen,
- einen rohrförmigen Dreharm (21), der sich von der Platte aus im Wesentlichen parallel zu dem Rollenfuß (15) erstreckt,
- eine untertassenförmige Dichtung (26), die an dem rohrförmigen Arm (21) befestigt ist, die Rolle eine Vorrichtung zur Kopplung der untertassenförmigen Dichtung (26) mit der Stützplatte (14) umfasst,
**dadurch gekennzeichnet, dass** die untertassenförmige Dichtung (26) einen Wartungszapfen (20) trägt, der sich auf der zum Gehäuse des Motors entgegengesetzten Seite senkrecht zu der Dichtung erstreckt.

2. Spannrolle nach Anspruch 1, **dadurch gekennzeichnet, dass** sie Verbindungsmittel aufweist, die geeignet sind, die untertassenförmige Dichtung (26) und den Dreharm (21) drehfest miteinander zu verbinden.

3. Spannrolle (10) nach Anspruch 2, **dadurch gekennzeichnet, dass** die untertassenförmige Dichtung (26) einen axialen Verbindungsfinger (27) trägt, der in einer komplementären Aussparung (30) aufgenommen wird, die axial und am Umfang des rohrförmigen Armes (21) ausgebildet ist.

4. Spannrolle (10) nach Anspruch 2, **dadurch gekennzeichnet, dass** die untertassenförmige Dichtung (26) einen Einschnitt (33) trägt, der einen Verbindungszahn (32) aufnimmt, der sich vom Umfangsrand des rohrförmigen Armes (21) aus axial erstreckt.

5. Spannrolle nach Anspruch 2, **dadurch gekennzeichnet, dass** die untertassenförmige Dichtung (26) eine Verzahnung trägt, die mit einer komplementären Verzahnung im Eingriff steht, die von dem rohrförmigen Arm (21) getragen wird.

6. Spannrolle nach einem der Ansprüche 1 bis 5, **dadurch gekennzeichnet, dass** die untertassenförmige Dichtung eine Befestigungsbohrung (24) aufweist, die von einem Befestigungsmittel durchquert wird, welches in die innere Kammer (25) des rohrförmigen Armes (21) eingepresst ist.

7. Spannrolle (10) nach den Ansprüchen 1 bis 6, **dadurch gekennzeichnet, dass** der Wartungszapfen (20) ein Mittel zur Verbindung mit einem Schraubwerkzeug trägt.

8. Kraftfahrzeugmotor, der eine Spannrolle nach den Ansprüchen 1 bis 7 aufweist.

## Claims

1. Tensioning roller (10) for a belt (11) of a motor vehicle engine, comprising:
- a support plate (14) pivotable about a roller foot (15) fixed securely to a crankcase of the engine, from an angular stop position, said roller comprising elastic means (18) for automatically returning said support plate to the stop position,
- a tubular rotation arm (21) extending from said plate substantially parallel to the roller foot (15),
- a sealing dish (26) fixed to the tubular arm (21),
said roller comprises a device for coupling the sealing dish (26) with the support plate (14) and **characterized in that** the sealing dish (26) bears a maintenance finger (20) extending orthogonally to said dish on the opposite side to the crankcase of the engine.

2. Tensioning roller according to Claim 1, **characterized in that** it comprises connection means able to allow the sealing dish (26) and the tubular arm (21) to rotate as one.

3. Tensioning roller (10) according to Claim 2, **characterized in that** the sealing dish (26) bears an axial connection finger (27) received in a complementary notch (30) formed axially and at the periphery of the tubular arm (21).

4. Tensioning roller (10) according to Claim 2, **characterized in that** the sealing dish (26) bears an incision (33) accommodating a connecting tooth (32) extending axially from the peripheral edge of the tubular arm (21).

5. Tensioning roller according to Claim 2, **characterized in that** the sealing dish (26) bears a toothing engaged in a complementary toothing borne by the tubular arm (21).

6. Tensioning roller according to any one of Claims 1 to 5, **characterized in that** the sealing dish comprises a fixing orifice (24) traversed by a fixing means which is inserted into the inner chamber (25) of the tubular arm (21).

7. Tensioning roller (10) according to Claims 1 to 6, **characterized in that** the maintenance finger (20) bears a means of interface with a screwing tool.

8. Motor vehicle engine comprising a tensioning roller according to Claims 1 to 7.
